# EUROPÄISCHE PATENTANMELDUNG

(11) **EP 1 111 330 A1**
(43) Veröffentlichungstag der Anmeldung: **27.06.2001**
(21) Anmeldenummer: 99125273.5
(22) Anmeldetag: 19.12.1999
(51) Int. Cl.: G01B 5/08, G01B 3/50, B23Q 17/22, B07C 5/06

(54) **Verfahren und Vorrichtung zum Erkennen von Werkstücken**

(71) Anmelder: MiniTec Maschinenbau GmbH, 66914 Waldmohr (DE)
(72) Erfinder: Risch, Karl-Heinz, 57410 Gros Rederching (FR)
(74) Vertreter: Klein, Friedrich

(57) **Zusammenfassung**

Die Erfindung betrifft ein Verfahren, bei dem zur Unterscheidung von Werkstücken voneinander bzw zur Bestimmung der Relativlage von Werkstücken zu einer Bezugsebene geometrische Kenngrößen verwendet werden, wobei das jeweilige Werkstück zunächst innerhalb einer Meßvorrichtung in einer Meßposition positioniert wird, und sodann ein eine Mehrzahl von in seiner Bewegungsrichtung hintereinander angeordnete Meßelemente unterschiedlicher Meßwerte aufweisender Meßtaster von einer Ausgangsposition in einen die Kenngröße(n) aufweisenden Bereich des Werkstückes bis zu einer Endposition bewegt wird, in der eines der Meßelemente am Werkstück anliegt, wonach der Verfahrweg des Meßtasters von seiner Ausgangsposition bis zu seiner Endposition ermittelt und die Differenz zwischen dem Istwert des Verfahrweges des Meßtasters und einem aufgrund von Werkstück-Daten vorausbestimmten Sollwert des Verfahrweges gebildet wird, um ein dem Wert dieser Differenz entsprechendes Signal zu erzeugen.

## Beschreibung

Die Erfindung betrifft ein Verfahren und eine Vorrichtung zum Erkennen von Werkstücken.

Zum Erkennen von Werkstücken oder der Lage derselben sind unterschiedliche Verfahren und auch unterschiedliche Vorrichtungen bekannt.

So sind beispielsweise Vorrichtungen bekannt, die mittels einer fest installierten Kamera eine Aufnahme des jeweiligen Werkstückes anfertigen und diese dann im Rahmen eines Korrelationsverfahrens mit einer Musterabbildung des entsprechenden Werkstückes vergleichen. Bei diesem Vergleich läßt sich zwar auch gleichzeitig die Relativlage des Werkstückes zu einer vorgegebenen Sollage ermitteln, jedoch sind diese Vorrichtungen einerseits relativ teuer und andererseits sind sie für einen Einsatz in einer industriellen Fertigung wenig geeignet.

Durch die DE 197 10 037 A1 ist eine Vorrichtung zur Längenvermessung von zu sammelnden Behältern bekannt, die einen in Meßrichtung elektromotorisch verschiebbaren Meßstößel aufweist, der mit einer Meß- und Auswertvorrichtung zusammenwirkt. Dabei wird mittels eines "Eich-Behälters" zunächst die Sollposition der Meßstelle ermittelt, um beim anschließenden Messen der jeweiligen Behälter die jeweilige Istposition der Meßstelle zu ermitteln und deren Daten mit denjenigen der Sollposition zu vergleichen. Entsteht bei diesem Vergleich eine Differenz der Positionsdaten, so ist zwar feststellbar, daß der Behälter nicht die vorgegebene Größe aufweist, es wird aber nicht festgestellt, um welchen Betrag der Behälter von der vorgegebenen Länge abweicht; auch wird nicht festgestellt, ob der Behälter zu groß oder zu klein ist.

Die DD-PS 0 152 987 zeigt eine Vorrichtung zur Höhenprüfung von aufrechtstehenden und mit einem Verschluß versehenen Behältern. Hier führt ein mit einem Tastelement versehener Meßstößel eine zur vertikalen Achse des Behälters parallel gerichtete Meßbewegung aus, wobei dann, wenn der Meßweg durch einen schräg auf dem Behälter aufsitzenden Verschluß verkürzt wird, ein Signal ausgelöst wird, das anzeigt, daß die festgestellte Höhe von Behälter und Verschluß größer ist, als die sich bei ordnungsgemäß aufgesetztem Verschluß ergebende Gesamthöhe von Verschluß und Behälter. Mit dieser Vorrichtung wird demnach nur aus der sich durch einen schräg aufgesetzten Verschluß ergebenden Verkürzung des Meßweges festgestellt, daß der Verschluß nicht ordnungsgemäß auf dem Behälter aufsitzt.

In der DE 44 44 787 A1 ist eine Vorrichtung zur Vermessung von Werkstücken beschrieben, die in der Lage ist, Werkstücke sowohl nach ihrer Länge als auch nach der Größe und Form ihres Querschnittes zu bestimmen. Hierzu wird ein mit einer Sensoreinrichtung versehener Meßkopf an den Oberflächen des zu vermessenden Werkstückes entlang geführt, wobei eine Wegmessvorrichtung den Abtastweg des Meßkopfes erfaßt, sodaß die Daten des Abtastweges mit Hilfe einer Auswerteinrichtung mit den gespeicherten Daten der insgesamt gelagerten Werkstücke verglichen werden können. Diese Vorrichtung dient damit lediglich dazu, eine hinsichtlich des Querschnittes und der Länge eines Werkstückes optimale Auswahl zu ermöglichen.

Die DE 44 20 137 A1 offenbart ein Meßgerät zur Überprüfung der Abmessungen von Werkstücken mit zentrischen und exzentrischen Abschnitten, wobei jedem der Abschnitte eine eigene Gruppe von Meßmitteln zugeordnet ist. Die den exzentrischen Abschnitten zugeordnete Meßmittelgruppe umfaßt mehrere in der Ebene senkrecht zur Werkstücklängsachse bewegbare Meßfühler, die bei Drehung des Werkstückes entweder auf Sollbahnen entsprechend der Exzentrizität des entsprechenden Abschnittes steuerbar sind oder deren Positionen entsprechend den Signalen der Meßfühler den Bewegungen der zu vermessenden Abschnitte nachregelbar sind. Die Anwendung von Vorrichtungen dieser Art ist auf spezifisch ausgebildete Teile wie beispielsweise Kurbelwellen beschränkt. Für diese spezifische Anwendung sind derartige Vorrichtungen zwar relativ flexibel, jedoch geht ihre technische Offenbarung im wesentlichen nicht über die Anwendung von nahezu kraftfrei wirkenden mechanischen Meßfühlern hinaus.

In der DE 39 41 756 C2 ist ein Verfahren zur Ermittlung sowohl der Anwesenheit eines Werkstückes auf einer Werkzeugmaschine, als auch zur Ermittlung seiner Lage und seiner Abmessungen gezeigt. Hierbei wird für einen bestimmten Bereich eines verschieblich angeordneten Bauteils der Werkzeugmaschine ein innerhalb des Werkstückes liegender Positionssollwert vorgegeben, wobei die Positions-Istwerte zyklisch einem Komperator zugeführt werden, um dann ein Signal zu erzeugen, wenn zwischen zwei aufeinanderfolgenden Positions-Istwerten eine Differenz entsteht, die ein vorgegebenes Toleranzfeld überschreitet.

Schließlich zeigt die DE 23 10 577 C3 eine Meßmaschine zum selbsttätigen Messen einer Mehrzahl von Werkstücken gleicher Form aber unterschiedlicher Sollgrößen, die den Meßstellen in beliebiger Reihenfolge zugeführt werden. Hierzu ist eine der Anzahl der möglichen Sollgrößen entsprechende Anzahl von sogenannten Voruntersuchungseinrichtungen vorgesehen, wobei die Meßeinrichtung durch eine Steuereinheit in eine der Anzahl der Sollgrößen entsprechende Anzahl von Meßstellungen bewegbar ist. Ein besonderer Meßeffekt wird auch mit dieser Vorrichtung nicht erzielt. Ihr wesentlicher Vorteil besteht vielmehr darin, daß die Werkstücke hinsichtlich ihrer Sollgröße der Meßstelle in beliebiger Reihenfolge zugeführt werden können. Diese Vorrichtung ist jedoch insoweit relativ aufwendig, als einerseits eine der Anzahl der möglichen Sollgrößen entsprechende Anzahl von Voruntersuchungseinrichtungen erforderlich ist, und andererseits pro Werkstück zwei Messungen durchgeführt werden müssen. Nicht zuletzt muß bei dieser Vorrichtung die eigentliche Meßeinrichtung in eine der Anzahl der möglichen Sollgrößen entsprechende Anzahl von Meßstellungen bewegbar sein.

Der Erfindung liegt daher zunächst die Aufgabe zu Grunde, ein Verfahren zu schaffen, das unter Einsatz möglichst einfacher Mittel sowohl zum Erkennen von Werkstücken, d.h. zum Unterscheiden unterschiedlicher Werkstücke voneinander, als auch zum Erkennen ihrer Relativlage zu einer Bezugsebene, beispielsweise zu ihrer Auflagefläche geeignet, ist.

Diese Aufgabe wird unter Einsatz einer Meßvorrichtung durch ein Verfahren gelöst, bei dem zur Unterscheidung der Werkstücke voneinander bzw zur Bestimmung der Relativlage des Werkstückes zu einer Bezugsebene eine oder mehrere geometrische Kenngrößen verwendet werden, wobei das jeweilige Werkstück zunächst innerhalb einer Meßvorrichtung in einer Meßposition positioniert wird, und sodann ein eine Mehrzahl von in seiner Bewegungsrichtung hintereinander angeordnete Meßelemente unterschiedlicher Meßwerte aufweisender Meßtaster von einer Ausgangsposition in einen die Kenngröße(n) aufweisenden Bereich des Werkstückes bis zu einer Endposition bewegt wird, in der eines der Meßelemente am Werkstück anliegt, wonach der Verfahrweg des Meßtasters von seiner Ausgangsposition bis zu seiner Endposition ermittelt und der Istwert des Verfahrweges des Meßtasters mit einem aufgrund von Werkstück-Daten vorausbestimmten Sollwert des Verfahrweges verglichen wird, um anschließend die Differenz zwischen dem Ist-Verfahrweg und dem Soll-Verfahrweg des Meßtasters auszuwerten und ein dem Auswertergebnis entsprechendes Signal zu erzeugen.

Die Erfindung geht damit von eindimensionalen und damit leicht meß- bzw erfaßbaren Kenngrößen der entsprechenden Werkstücke aus und unterscheidet diese im einfachsten Fall durch Erfassen des Abstandes zwischen ihrer Oberseite, die der Endposition des Meßtasters entspricht, und der Ausgangsposition des Meßtasters. Dieser Abstand ist der Istwert des Verfahrweges des Meßtasters, der mit dem aufgrund der Werkstückgröße vorbestimmten Sollwert des Verfahrweges verglichen wird.

Damit können beispielsweise unterschiedlich lange Büchsen, die in Aufrechtlage der Meßvorrichtung zugeführt werden, voneinander unterschieden werden.

Sind die als Beispiel genannten Büchsen zwar gleich lang, weisen aber unterschiedlich große Innendurchmesser auf, so kann ihr Innendurchmesser als Kenngröße verwendet werden. In diesem Fall wird die Eintauchtiefe des unterschiedliche und aufeinander abgestimmte Meßwerte aufweisenden Meßtasters in die Bohrung im voraus ermittelt und aufgrund dieser und des Abstandes zwischen dem Werkstück und der Ausgangsposition des Meßtasters dessen Soll-Verfahrweg vorausbestimmt. Ist dann der tatsächliche Verfahrweg des Meßtasters kleiner oder größer als der vorgegebene Soll-Verfahrweg so ist hieraus zu erkennen, daß es sich um eine Büchse mit einer dementsprechend kleinern oder größeren Bohrung handelt. Dabei ist es selbstverständlich möglich, in einem Speicher der Datenverarbeitungseinrichtung mehrere den in Frage kommenden Durchmessern entsprechende Sollwerte für den Verfahrweg des Meßtasters abzulegen und diese gegebenenfalls nacheinander selbsttätig abzurufen, sodaß auch der dem Ist-Verfahrweg des Meßtasters entsprechende Soll-Verfahrweg mit diesem verglichen und die Identität des Werkstückes festgestellt werden kann.

Eine relativ einfache Durchführung des Verfahrens, wobei dennoch ausreichend genaue Ergebnisse erzielt werden, ergibt sich dann, wenn mit den Meßelementen der Durchmesser einer Bohrung oder der Außendurchmesser eines zylindrischen Bereiches des Werkstückes ermittelt wird.

Der Erfindung liegt die weitere Aufgabe zu Grunde, eine Vorrichtung zu schaffen, die insbesondere zur Durchführung des vorbeschriebenen Verfahrens geeignet ist.

Diese Aufgabe kann durch eine Vorrichtung gelöst werden, die die kennzeichnenden Merkmale des Patentanspruches 4 aufweist.

Um mit dieser Vorrichtung auch eine größere Anzahl unterschiedlicher Werkstücke identifizieren oder deren Relativlage zur Auflageplatte erkennen zu können, kann die Datenverarbeitungseinrichtung einen Speicher für unterschiedliche Sollwerte des Verfahrweges des Meßtasters aufweisen, die mittels einer Eingabevorrichtung in den Speicher eingebbar und mittels einer Auswahlvorrichtung abrufbar sind.

Eine in konstruktiver Hinsicht günstige Lösung, die trotz ihrer Einfachheit ausreichend genaue Ergebnisse liefert, ergibt sich dadurch, daß die Meßelemente des Meßtasters zu einem Meßmittel zusammengefaßt sind, und dieses als Innen- oder Außenkonus ausgebildet ist.

Die Ausbildung des Meßmittels als Innen- bzw Außenkonus hat gleichzeitig den Vorteil, daß die Werkstücke in der Meßvorrichtung zunächst nicht genau positioniert werden müssen. Sofern die Abweichung der Lage der Werkstücke von ihrer genauen Lage unterhalb des Meßmittels nicht zu groß ist, werden von dem sich nach unten bewegenden Innen- oder Außenkonus Seitenkräfte auf das jeweilige Werkstück ausgeübt und dieses dabei mittig unter den Innen- bzw Außenkonus gebracht.

Weitere Einzelheiten und Vorteile der Erfindung ergeben sich aus der nachfolgenden Beschreibung von anhand der Zeichnung näher erläuterten Ausführungsformen der Erfindung.

Es zeigt:
- **Fig.1:**: einen Meßvorgang an einem Werkstück in einer "Oben-Lage", wobei eine erste Bohrung als Kenngröße dient;
- **Fig.2:**: den Meßvorgang am gleichen, sich aber in "Unten-Lage" befindlichen Werkstück, wobei eine zweite Bohrung als Kenngröße dient;
- **Fig.3:**: einen Meßvorgang am gleichen, sich in der Oben-Lage befindlichen Werkstück, wobei ein erster zylindrischer Bereich als Kenngröße dient;
- **Fig.4:**: einen Meßvorgang am gleichen, sich in der Unten-Lage befindlichen Werkstück, wobei ein zweiter zylindrischer Bereich als Kenngröße dient;

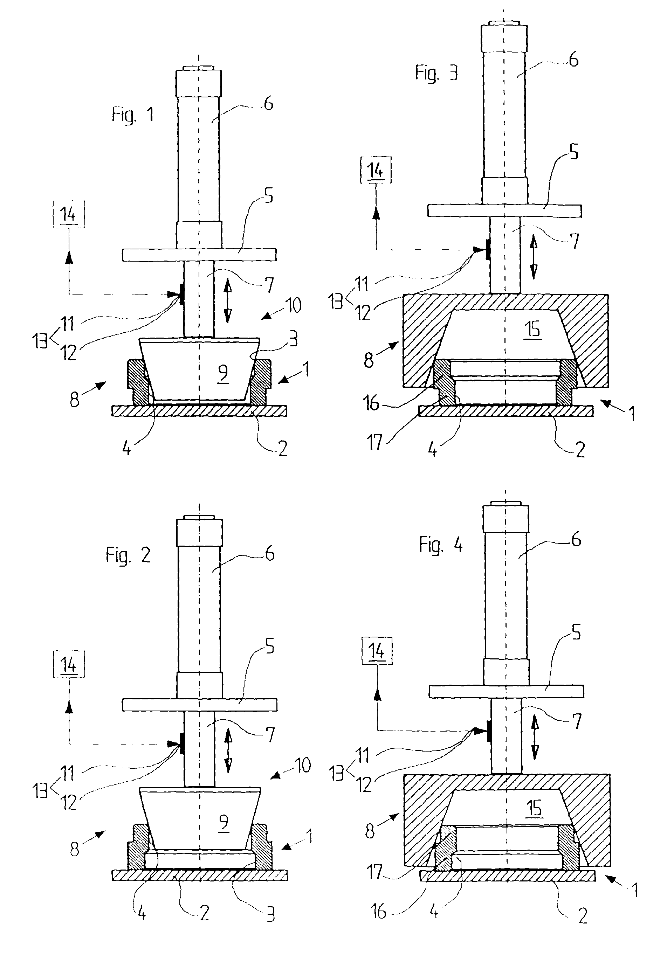

In der Zeichnung ist mit 1 ein Werkstück bezeichnet, das jeweils auf einer Auflageplatte 2 aufliegt. Das Werkstück befindet sich in Fig.1 in seiner Oben-Lage, in der eine erste Bohrung 3 als Kenngröße dient. Das gleiche Werkstück 1 ist in Fig. 2 in seiner Unten-Lage gezeigt, in der eine zweite Bohrung 4 als Kenngröße dient. Oberhalb der Auflageplatte 2 ist an einem nur symbolisch dargestellten ortsfesten Gestell 5 ein Pneumatik-Zylinder 6 befestigt, der eine Kolbenstange 7 aufweist. Die Kolbenstange 7 ist in vertikaler Richtung bewegbar und trägt im Bereich ihres unteren Endes ein Meßmittel 8, das bei der in den Fig. 1 und 2 gezeigten Ausführungsform als Außenkonus 9 ausgebildet ist.

Das Meßmittel 8 weist somit eine Vielzahl von einander benachbarten Meßelementen auf, die entsprechend der Durchmesserveränderung des Außenkonus 9 unterschiedliche Meßwerte aufweisen, deren Größe zur Basis des Außenkonus 9 stetig zunimmt und sich zu dessen Spitze hin stetig verringert.

Die Kolbenstange 7 bildet zusammen mit dem als Außenkonus 9 ausgebildeten Meßmittel 8 einen Meßtaster 10 der in Fig. 1 in die erste Bohrung 3 und in Fig. 2 in die zweite Bohrung 4 des Werkstückes eingetaucht ist. Da der Durchmesser der beiden Bohrungen 3 und 4 unterschiedlich ist, ist der Meßtaster 10 in Fig.1 nur relativ gering in die Bohrung 3 eingetaucht, während er in Fig.2 demgegenüber relativ weit in die zweite Bohrung 4 eingetaucht ist.

Um die Eintauchtiefe des Meßtasters 10 in das jeweilige Werkstück bestimmen zu können, ist am Gestell 5 bzw an der Kolbenstange 7 eine Längenmeßeinrichtung 13 vorgesehen, die von einer an der Kolbenstange 7 befestigten Skala 11 und einem an dem Gestell 5 angeordneten Meßfühler 12 gebildet sein kann.

Die Längenmeßeinrichtung 13 kann als elektronische Meßeinrichtung ausgebildet sein, wobei die Skala 11 einen Strichcode aufweisen kann und der Meßfühler 12 als Encoder ausgebildet ist. Die Längenmeßeinrichtung 13 kann aber auch auf der Basis einer Hall-Sondenanordnung oder in sonst geeigneter Weise wirken.

Da einerseits der Durchmesser der beiden Bohrungen 3,4 und andererseits das Kegelverhältnis des Außenkonus 9 bekannt sind, läßt sich die Eintauchtiefe des Außenkonus 9 in die Bohrungen 3 bzw 4 aus diesen Größen im vorab bestimmen. Der Außenkonus 9 befindet sich in seiner Ausgangsposition in einem bestimmten Abstand zur Oberfläche des Werkstückes, sodaß sich der Verfahrweg des Außenkonus 9 aus diesem Abstand und seiner Eintauchtiefe in das Werkstück ergibt. Damit läßt sich der Sollwert des Verfahrweges für eine bestimmte Werkstückspezifikation im voraus bestimmen.

Dieser Sollwert des Verfahrweges kann im Speicher einer Datenverarbeitungseinrichtung 14 abgelegt werden. Der Meßfühler 12 ist ebenfalls mit der Datenverarbeitungseinrichtung 14 verbunden und liefert dieser während der Bewegung des Meßtasters 10 von seiner Ausgangsposition bis zum Erreichen seiner Endposition dem Ist-wert des Verfahrweges entsprechende Signale. Diese werden in der Datenverarbeitungseinrichtung 14 mittels einer Auswerteinrichtung, die auch einen Vergleicher aufweist, in entsprechender Weise mit den dem vorausbestimmten Sollwert des Verfahrweges entsprechenden Signalen verglichen.

Nimmt das Werkstück die in Fig. 1 gezeigte Oben-Lage ein, und ist der Außenkonus 9 um den Betrag der maximal möglichen Eintauchtiefe in das Werkstück eingedrungen, so hat der Außenkonus 9 seine Endposition erreicht. Der von der Längenmeßeinrichtung 13 ermittelte Istwert des Verfahrweges entspricht der Summe aus dem Abstand des Außenkonus 9 zur Oberseite des Werkstückes und der Eintauchtiefe des Außenkonus 9 in die Bohrung 3.

Ist die in Fig.1 gezeigte Lage des Werkstückes die für seine Weiterbearbeitung benötigte Sollage des Werkstückes, so ergibt sich bei der Bildung der Differenz zwischen dem der Datenverarbeitungseinrichtung 14 von der Längenmeßeinrichtung 13 zugeführten Ist-wert des Verfahrweges des Außenkonus 9 und dem vorausbestimmten Sollwert des Verfahrweges des Außenkonus 9 der Wert Null. Aus dem von der Datenverarbeitungseinrichtung 14 ausgegebenen Signal, das dem Wert Null entspricht, ist somit zu erkennen, daß sich das Werkstück in seiner Oben-Lage befindet. Das ausgegebene Signal kann dazu verwendet werden, die Zufuhr des Werkstückes zur nächsten Bearbeitungsstation frei zu geben.

Befindet sich das Werkstück in der in Fig. 2 dargestellten Unten-Lage, so dringt der Außenkonus 9 in die gegenüber der Bohrung 3 größere Bohrung 4 tiefer ein als in die Bohrung 3. Damit ist der Istwert des Verfahrweges des Außenkonus 9 wesentlich größer als bei sich in Oben-Lage befindlichem Werkstück. Nachdem der vorausbestimmte Sollwert des Verfahrweges der gleiche ist, ist die Differenz zwischen dem Istwert des Verfahrweges und dessen Sollwert größer als Null. Da die Datenverarbeitungseinrichtung 14 bei einem Wert, der größer als Null ist, ein anderes Signal als bei einem Wert, der gleich Null ist, ausgibt, ist aus diesem Signal zu erkennen, daß sich die größere Bohrung 4 an der Oberseite des Werkstückes befindet, und dieses somit seine Unten-Lage einnimmt. Das von der Datenverarbeitungseinrichtung 14 ausgegebene und zum ersten Signal unterschiedliche Signal kann dazu benutzt werden, die Zufuhr des Werkstückes zur nächsten Bearbeitungsstation zu sperren und das Werkstück zum Werkstückvorrat zurückzuführen.

Die in den Fig. 3 und 4 gezeigte zweite Ausführungsform der Erfindung entspricht hinsichtlich ihres Aufbaues und ihrer grundsätzlichen Funktionsweise der in den Fig. 1 und 2 gezeigten ersten Ausführungsform.

Ein Unterschied besteht nur insoweit, als das Meßmittel 8 nicht als Außenkonus 9 sondern als Innenkonus 15 ausgebildet ist.

Während bei der ersten Ausführungsform die Größe einer Bohrung als Kenngröße für das Werkstück benutzt und die Eintauchtiefe des Außenkonus 9 in die Bohrung zusammen mit dem Abstand der Ausgangsposition des Außenkonus 9 zur Ermittlung des Sollwertes des Verfahrweges dient, wird bei der zweiten Ausführungsform der Erfindung der Außendurchmesser eines zylindrischen Bereiches des Werkstückes als Kenngröße für das Werkstück benutzt.

Analog zur Situation gemäß Fig.1 befindet sich das Werkstück in seiner Oben-Lage; der Innenkonus 15 bewegt sich daher nur um einen relativ geringen Betrag über den dickeren Bereich 16 des Werkstückes. Damit ergibt sich der Sollwert für den Verfahrweg des Innenkonus 15 in analoger Weise aus diesem Betrag und dem Abstand der Oberseite des Werkstückes zur Ausgangsposition des Innenkonus 15. Ist der durch die Längenmeßeinrichtung 13 gemessene Istwert des Verfahrweges gleich dem Sollwert desselben, so ist aus dem Wert Null der Differenz und dem hieraus resultierenden Signal erkennbar, daß sich das Werkstück in Fig. 3 ebenfalls in seiner Sollage befindet und demzufolge zur nächstfolgenden Bearbeitungsstation geführt werden darf.

Befindet sich das Werkstück in der in Fig.4 dargestellten Unten-Lage so bewegt sich der Innenkonus 15 über den gegenüber dem dickeren Bereich 16 wesentlich dünneren Bereich 17 des Werkstückes. Da dieser Überfahrweg des Innenkonus 15 wesentlich größer als der Überfahrweg gemäß Fig. 3 ist, ergibt sich bei der entsprechenden Differenzbildung ein Wert, der größer als Null ist. Aus dem diesem Wert entsprechenden Signal ist dann zu erkennen, daß das Werkstück seine Unten-Lage einnimmt und in dieser Lage nicht zur nächstfolgenden Bearbeitungsstation geführt werden darf.

## Patentansprüche

1. Verfahren zum Erkennen der Lage und/oder einer Kenngröße eines Werkstückes unter Verwendung einer Meßvorrichtung mit folgenden Schritten:
**a)** Positionieren des Werkstückes in der Meßposition der Meßvorrichtung;
**b)** Bewegen eines eine Mehrzahl von in seiner Bewegungsrichtung hintereinander angeordneten Meßelementen unterschiedlicher Meßwerte aufweisenden Meßtasters (10) von einer Ausgangsposition in einen die Kenngröße aufweisenden Bereich des Werkstückes bis zu einer Endposition, in der eines der Meßelemente am Werkstück anliegt;
**c)** Ermitteln des Verfahrweges des Meßtasters (10) von seiner Ausgangsposition bis zu seiner Endposition;
**d)** Vergleichen des Istwertes des Verfahrweges des Meßtasters (10) mit einem aufgrund von Werkstück-Daten vorausbestimmten Soll-Verfahrweg des Meßtasters (10);
**e)** Auswerten der Differenz zwischen dem Ist-Verfahrweg und dem Soll-Verfahrweg des Meßtasters (10) und Ausgeben eines dem Auswertergebnis entsprechenden Signals.

2. Verfahren nach Anspruch 1, dadurch gekennzeichnet, daß mit den Meßelementen der Durchmesser einer Bohrung des Werkstückes ermittelt wird.

3. Verfahren nach Anspruch 1, dadurch gekennzeichnet, daß mit den Meßelementen der Außendurchmesser eines zylindrischen Bereiches des Werkstückes ermittelt wird.

4. Vorrichtung insbesondere zur Durchführung des Verfahrens nach Anspruch 1, enthaltend:
**a)** eine Auflageplatte (2) für das Werkstück (1);
**b)** einen im wesentlichen senkrecht zur Auflageplatte (2) bewegbaren Meßtaster (10) mit einer Mehrzahl von in seiner Bewegungsrichtung hintereinander angeordneten Meßelementen mit unterschiedlichen Meßwerten;
**c)** eine Längenmeßeinrichtung (13) zur Erzeugung von der Größe des Verfahrweges des Meßtasters (10) von seiner Ausgangsposition bis zur Endposition entsprechenden Meßimpulsen;
**d)** eine mit der Längenmeßeinrichtung (13) verbundene Datenverarbeitungseinrichtung (14) mit einer Eingabevorrichtung zum Eingeben werkstückspezifischer Sollwerte für den Verfahrweg des Meßtasters (10) sowie mit einem Vergleicher, um den Istwert des Verfahrweges des Meßtasters (10) mit dem vorgegebenen Sollwert seines Verfahrweges zu vergleichen;
**e)** eine der Datenverarbeitungseinrichtung (14) zugeordnete Auswerteinrichtung zum Auswerten der Differenz zwischen dem Ist- und Sollwert des Verfahrweges des Meßtasters (10) und Erzeugen eines dem Auswertergebnis entsprechenden Signals.

5. Vorrichtung nach Anspruch 4, dadurch gekennzeichnet, daß die Datenverarbeitungseinrichtung (14) einen Speicher für unterschiedliche Sollwerte des Verfahrweges des Meßtasters (10) aufweist und diese mittels einer Auswahlvorrichtung abrufbar sind.

6. Vorrichtung nach Anspruch 4, dadurch gekennzeichnet, daß die Meßelemente zu einem Meßmittel (8) zusammengefaßt sind und dieses einen Außenkonus (9) aufweist.

7. Vorrichtung nach Anspruch 4, dadurch gekennzeichnet, daß die Meßelemente zu einem Meßmittel (8) zusammengefaßt sind und dieses einen Innenkonus (15) aufweist.
